Europäisches Patentamt

European Patent Office

Office européen des brevets

(11) Veröffentlichungsnummer : **0 074 027**
**B1**

(12) **EUROPÄISCHE PATENTSCHRIFT**

(45) Veröffentlichungstag der Patentschrift :
28.11.84

(51) Int. Cl.³ : **B 60 N   3/02**

(21) Anmeldenummer : **82107838.3**

(22) Anmeldetag : **26.08.82**

(54) **Haltegriff für Fahrzeuge.**

(30) Priorität : **05.09.81 DE 3135313**

(43) Veröffentlichungstag der Anmeldung :
**16.03.83 Patentblatt 83/11**

(45) Bekanntmachung des Hinweises auf die Patenterteilung : **28.11.84 Patentblatt 84/48**

(84) Benannte Vertragsstaaten :
**DE FR GB IT**

(56) Entgegenhaltungen :
**DE-U- 1 938 479**
**DE-U- 8 125 944**

(73) Patentinhaber : **Gebr. Happich GmbH**
**Postfach 10 02 49 Clausenbrücke 1**
**D-5600 Wuppertal 1 (DE)**

(72) Erfinder : **Treber, Willi O.**
**Allensteiner Strasse 26**
**D-5600 Wuppertal 2 (DE)**
Erfinder : **Dietz, Günter**
**Eggenbruch 97**
**D-5600 Wuppertal 1 (DE)**

## Beschreibung

Die Erfindung bezieht sich auf einen Haltegriff für Fahrzeuge. Hierunter sollen Türhaltegriffe (auch solche mit Armlehnen kombinierte), Dachrahmen-Haltegriffe, Einstieggriffe für Nutzfahrzeuge, Rückenlehnengriffe in Omnibussen usw. verstanden werden.

Die den herkömmlichen Haltegriffen, die in den verschiedensten Ausführungsformen bekannt geworden sind, zukommende Funktion besteht ausschließlich darin, Fahrzeugfahrgästen einen Halt zu bieten.

Die der Erfindung zugrunde liegende Aufgabe besteht nun darin, bei einem Haltegriff für Fahrzeuge das Auffinden bei Dunkelheit zu erleichtern.

Zur Lösung dieser Aufgabe ist der Haltegriff erfindungsgemäß mit zumindest einer elektrischen Lichtquelle ausgerüstet. Durch diese erfindungsgemäße Maßnahme werden beachtliche Vorteile erreicht. So ist es nunmehr möglich, auf die separate Fahrgastraumbeleuchtung gänzlich oder zumindest weitgehend zu verzichten. Weitaus wesentlicher ist es jedoch, daß nunmehr die Plazierung der Haltegriffe, die bei den verschiedenen Fahrzeugtypen recht unterschiedlich ist, auch bei Dunkelheit erkannt werden kann. Ein suchendes Herumtasten zum Auffinden des Haltegriffes, für das z. B. bei einer Notbremsung ohnehin keine Zeit bleibt, ist nun nicht mehr nötig, so daß die erfindungsgemäße Maßnahme auch als wichtiger Beitrag zur Unfallverhütung anzusehen ist.

Zweckmäßigerweise ist die Lichtquelle in einem Hohlraum des Haltegriffes angeordnet und damit gegen Beschädigung geschützt. Auch wird kein zusätzlicher Raum für die Lichtquelle benötigt.

Eine besonders vorteilhafte Ausgestaltung der Erfindung besteht darin, daß die den Hohlraum begrenzenden Wandungen ganz oder bereichsweise lichtdurchlässig sind. Damit ergibt sich eine blendfreie mehr diffuse und damit dem Auge wohltuende Ausleuchtung des Haltegriffes.

Der Haltegriff gemäß der Erfindung ist weiterhin gekennzeichnet durch eine zweiteilige, aus einem Trägerkörper und einem damit verbundenen Polsterkörper bestehende Ausbildung, wobei der Trägerkörper den Hohlraum aufweist und aus einem transparenten bzw. lichtdurchlässigen Werkstoff besteht. Das funktionstragende Teil, nämlich der Trägerkörper, bildet somit gleichzeitig das Lampengehäuse und den Griff, während der Polsterkörper Stoßverletzungen, die bei einem Auffahrunfall od. dgl. eintreten könnten, zu verhindern hilft.

In weiterer Ausgestaltung der Erfindung weist der Trägerkörper zumindest über wesentliche Bereiche seiner Länge einen als nach aussen offene Nut ausgebildeten Hohlraum auf, der im Bereich der Anlageflächen am tiefsten und zumindest in diesem Bereich mit Entlüftungsöffnungen ausgebildet ist und daß die offene Seite der Nut über die gesamte Länge durch den Polsterkörper, der an dem Trägerkörper über eine Klipsverbindung gehalten ist, abgedeckt ist. Durch die relativ große Ausbildung des Hohlraums wird in Verbindung mit den Entlüftungsöffnungen ein Stau der von der Lichtquelle ausgehenden Wärme vermieden. Andererseits wird eine einfach durchzuführende Abdeckung des Hohlraumes erreicht.

Der Trägerkörper ist nach einem weiteren Merkmal der Erfindung an seinen aussen liegenden Längskanten mit wulstartigen Verbreiterungen ausgebildet, über die die hinterschnittenen Randkanten eines den Polsterkörper tragenden Halteteils geklipst sind. Diese Maßnahme dient dem einfachen Zusammenbau der Haltegriffteile, aber auch deren Demontage für einen etwa notwendigen Austausch einer defekten Lichtquelle.

Als Lichtquelle ist zweckmäßigerweise ein zwischen zwei Soffitten aufgenommenes Glühbirnchen vorgesehen. Dabei kann eine Soffitte z. B. mit einem Hohlniet aus metallischem Material an dem Trägerkörper befestigt sein. Wird durch den Hohlniet eine Befestigungsschraube hindurchgeführt und in z. B. eine Karosseriewand eingedreht, so ist in denkbar einfacher Weise der Massekontakt für die Lichtquelle hergestellt. Für die Zuleitung des Pluspols wird zweckmäßigerweise ein mit dem elektrischen Bordnetz des Fahrzeuges verbundener elektrischer Leiter an die zweite Soffitte angeschlossen, wozu der elektrische Leiter mit einem auf die Soffitte aufsteckbaren Kabelschuh versehen sein kann. Es ist denkbar, die elektrische Stromversorgung der Lichtquellen sämtlicher in einem Fahrzeug angeordneter Haltegriffe von einer zentralen Stelle aus, z. B. von einem am Armaturenbrett eines Fahrzeuges angeordneten Aus-Schalter zu steuern. Es ist aber auch möglich, zusätzlich oder alternativ, an jedem Haltegriff einen Aus-Schalter vorzusehen. Es ist weiterhin denkbar, die Lichtquellen sämtlicher Haltegriffe eines Fahrzeuges mit dessen Außenbeleuchtung parallel zu schalten.

Um den Haltegriff einfach und kostengünstig herstellen zu können, ist in weiterer Ausgestaltung der Erfindung vorgesehen, daß der Trägerkörper als Kunststoff-Spritzgußteil ausgebildet ist. Von besonderem Vorteil ist es dabei, daß der Trägerkörper aus Polycarbonat besteht; denn dieses Material erfüllt zuverlässig die technischen Anforderungen in bezug auf die Festigkeit, und es ist darüber hinaus in ausreichendem Maße lichtdurchlässig.

Im folgenden wird die Erfindung anhand zweier Ausführungsbeispiele, die in den anliegenden Zeichnungen dargestellt sind, näher erläutert. Es zeigen

Figur 1 ein erstes Ausführungsbeispiel des Haltegriffs in Ansicht,

Figur 2 einen Grundriß des Trägerkörpers von dem Haltegriff nach Fig. 1,

Figur 3 einen Schnitt A-A nach Fig. 1 und

Figur 4 ein zweites Ausführungsbeispiel des Haltegriffs in Ansicht.

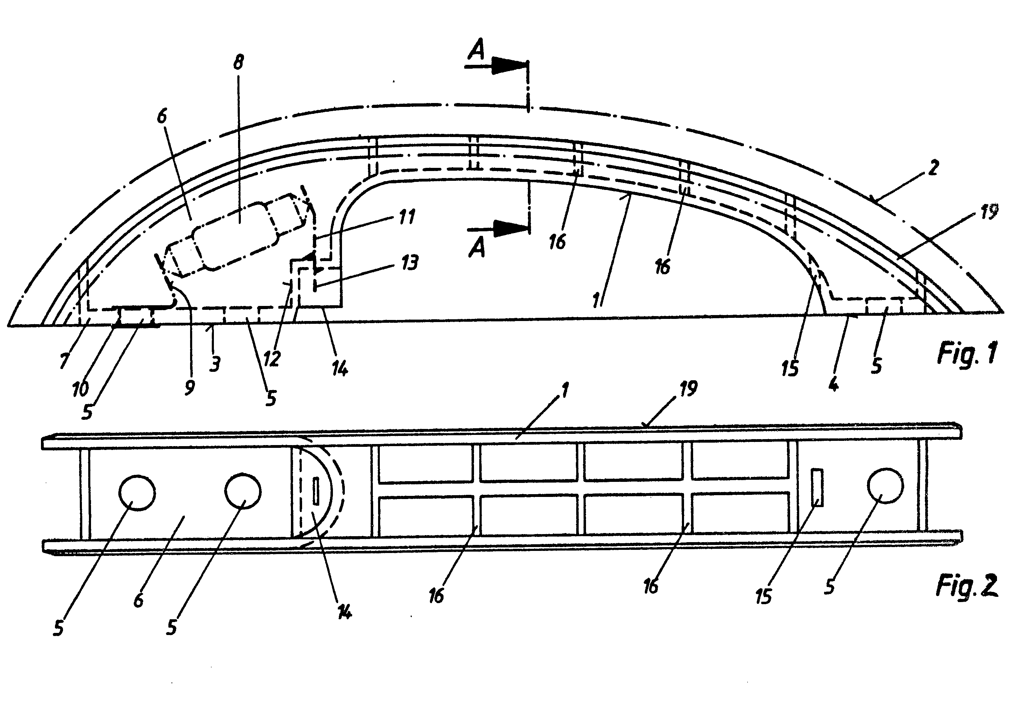

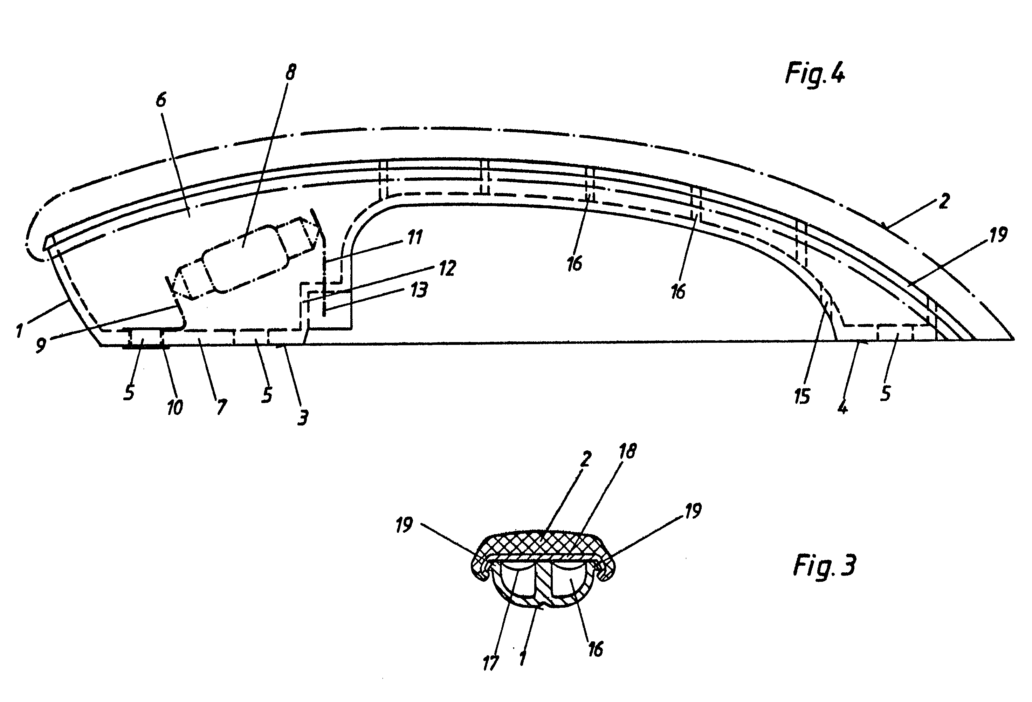

Der Haltegriff besteht aus einem Trägerkörper 1 und einem damit verbundenen, in den Fig. 1 und 4 lediglich strichpunktiert angedeuteten Polsterkörper 2.

Der Trägerkörper 1, der aus einem lichtdurchlässigen Spritzgußteil aus Polycarbonat besteht, besitzt eine bügelförmige Ausbildung mit beidendigen Auflageflächen 3, 4, die zur Anlage an eine Karosseriewandung, der Rückwand eines Fahrzeugsitzes (z. B. in Omnibussen) od. dgl. gelangen. Die die Auflageflächen 3, 4 bildenden Wandungen 7 sind mit Lochdurchzügen 5 für die Durchführung von Befestigungsmitteln, wie Schrauben versehen. Der Trägerkörper 1 bildet in dem von der Auflagefläche 3 ausgehenden Bereich einen relativ großen Hohlraum 6, in dem eine Lichtquelle 8 in Form eines Soffittenlämpchens untergebracht ist. Eine Soffitte 9 ist mittels eines Hohlniets 10 an der Wandung 7 befestigt. Die zweite Soffitte 11 ist in einem Materialansatz 12 des Trägerkörpers 1 verhakt und ihr freies Ende bildet eine Kontaktzunge 13, auf die ein mit einem nicht gezeigten elektrischen Leiter verbundener nicht gezeigter Kabelschuh od. dgl. aufsteckbar ist. Der elektrische Leiter wird dabei durch eine gleichzeitig der Entlüftung dienenden Öffnung 14 geführt. Eine zweite Entlüftungsöffnung 15 ist in der Nähe der Auflagefläche 4 vorgesehen.

Der von der Wandung 7 ausgehende Hohlraum 6 setzt sich über die gesamte Länge des Trägerkörpers 1 fort und endet an der Wandung der Auflagefläche 4. Die Versteifungsstege 16 weisen an ihren dem Polsterkörper 2 zugewandten Enden hohlrunde Ausnehmungen 17 auf, so daß eine gute Luftzirkulation gewährleistet ist.

Der Polsterkörper 2 ist mit einem Halteteil 18 verbunden, das beim Ausführungsbeispiel nach Fig. 1 aus dem Abschnitt einer stranggepreßten Profilleiste und beim Ausführungsbeispiel nach Fig. 4 aus einem Formspritzling bestehen kann. Das Halteteil 18 weist einen etwa C-förmigen Querschnitt auf und ist auf den Trägerkörper 1 aufklipsbar, der zu diesem Zweck an seinen außen liegenden Längskanten mit wulstartigen Verbreiterungen 19 ausgebildet ist.

## Ansprüche

1. Haltegriff für Fahrzeuge, dadurch gekennzeichnet, daß der Haltegriff mit zumindest einer elektrischen Lichtquelle (8) ausgerüstet ist.

2. Haltegriff nach Anspruch 1, dadurch gekennzeichnet, daß die Lichtquelle (8) in einem Hohlraum (6) des Haltegriffes angeordnet ist.

3. Haltegriff nach Anspruch 1 oder 2, dadurch gekennzeichnet, daß die den Hohlraum (6) begrenzenden Wandungen ganz oder bereichsweise lichtdurchlässig sind.

4. Haltegriff nach einem der Ansprüche 1 bis 3, gekennzeichnet durch eine zweiteilige, aus einem Trägerkörper (1) und einem damit verbundenen Polsterkörper (2) bestehende Ausbildung, wobei der Trägerkörper (1) den Hohlraum (6) aufweist und aus einem transparenten bzw. lichtdurchlässigen Werkstoff besteht.

5. Haltegriff nach einem der Ansprüche 1 bis 4, dadurch gekennzeichnet, daß der Trägerkörper (1) zumindest über wesentliche Bereiche seiner Länge einen als nach außen offene Nut ausgebildeten Hohlraum (6) aufweist, der im Bereich der Anlageflächen (3, 4) am tiefsten und zumindest in diesem Bereich mit Entlüftungsöffnungen (14, 15) ausgebildet ist, und daß die offene Seite der Nut über die gesamte Länge durch den Polsterkörper (2), der an dem Trägerkörper (1) über eine Klipsverbindung gehalten ist, abgedeckt ist.

6. Haltegriff nach einem der Ansprüche 1 bis 5, dadurch gekennzeichnet, daß der Trägerkörper (1) an seinen außen liegenden Längskanten mit wulstartigen Verbreiterungen (19) ausgebildet ist, über die die hinterschnittenen Randkanten eines den Polsterkörper (2) tragenden Halteteils (18) geklipst sind.

7. Haltegriff nach einem der Ansprüche 1 bis 6, dadurch gekennzeichnet, daß die Lichtquelle (8) ein zwischen zwei Soffitten (9, 11) aufgenommenes Glühbirnchen ist.

8. Haltegriff nach einem der Ansprüche 1 bis 7, dadurch gekennzeichnet, daß der Trägerkörper (1) als Kunststoff-Spritzgußteil ausgebildet ist.

9. Haltegriff nach Anspruch 8, dadurch gekennzeichnet, daß der Trägerkörper (1) aus Polycarbonat besteht.

## Claims

1. A hand grip for vehicles, characterized in that it is provided with at least one electric light source (8).

2. A hand grip according to Claim 1, characterized in that the light source (8) is arranged in a cavity (6) in the hand grip.

3. A hand grip according to Claim 1 or 2, characterized in that the walls defining the cavity (6) are completely translucent or in part translucent.

4. A hand grip according to any one of Claims 1 to 3, characterized by a two-part construction comprising a carrier member (1) and a cushion member (2) connected thereto, the carrier member (1) being provided with the cavity (6) and being made of a transparent or translucent material.

5. A hand grip according to any one of Claims 1 to 4, characterized in that the carrier member (1) is provided, at least over substantial zones of its length, with a cavity (6) which comprises an outwardly-open channel and which is deepest in the zone of the fitting surfaces (3, 4) and has ventilation openings (14, 15) at least in this zone, and in that the open side of the channel is covered over the entire length by a cushion member (2) which is secured to the carrier member (1) by a clip connection.

6. A hand grip according to any one of Claims 1 to 5, characterized in that, at its outer longitudinal edges, the carrier member (1) is provided with bead-like widened portions (19) over which are clipped the undercut edges of a retaining part (18) carrying the cushion member (2).

7. A hand grip according to any one of Claims 1 to 6, characterized in that the light source (8) is a lamp held between two lampholders (9, 11).

8. A hand grip according to any one of Claims 1 to 7, characterized in that the carrier member (1) is formed as an injection-moulded plastics part.

9. A hand grip according to Claim 8, characterized in that the carrier member (1) is made of polycarbonate.

**Revendications**

1. Poignée de retenue pour véhicules, caractérisée par le fait que la poignée est équipée d'au moins une source lumineuse électrique (8).

2. Poignée selon la revendication 1, caractérisée en ce que la source lumineuse (8) est disposée dans un volume creux (6) de la poignée.

3. Poignée selon la revendication 1 ou 2, caractérisée par le fait que les parois délimitant le volume creux (6) laissent passer la lumière en totalité ou par zones.

4. Poignée selon l'une des revendications 1 à 3, caractérisée par une configuration en deux parties constituée par un corps support (1) et un corps de rembourrage (2) relié au précédent, le corps support (1) comportant le volume creux (6) et étant constitué par un matériau transparent ou laissant passer la lumière.

5. Poignée selon l'une des revendications 1 à 4, caractérisée par le fait que le corps support (1) comporte sur des zones substantielles de sa longueur un volume creux (6) réalisé sous forme de gorge ouverte vers l'extérieur, qui a sa profondeur maximale dans la zone des surfaces d'appui (3, 4) et est muni au moins dans cette zone d'orifices d'aération (14, 15), et par le fait que le côté ouvert de la gorge est recouvert sur toute sa longueur par le corps de rembourrage (2), qui est maintenu sur le corps support par encliquetage.

6. Poignée selon l'une des revendications 1 à 5, caractérisée par le fait que le corps support (1) est muni sur ses arêtes longitudinales situées à l'extérieur, de parties élargies (19) en forme de bourrelets, sur lesquelles s'encliquètent les arêtes de bords dépouillées d'un élément de maintien (18) portant le corps de rembourrage (2).

7. Poignée selon l'une des revendications 1 à 6, caractérisée par le fait que la source lumineuse (8) est une petite ampoule à incandescence tenue entre deux contacts (9, 11).

8. Poignée selon l'une des revendications 1 à 7, caractérisée par le fait que le corps support (1) est réalisé sous forme d'élément en matière plastique moulé par injection.

9. Poignée selon la revendication 8, caractérisée par le fait que le corps support (1) est en polycarbonate.

Fig. 1

Fig. 2

0 074 027

Fig. 4

Fig. 3